Europäisches Patentamt

European Patent Office

Office européen des brevets

(19)

(11) Numéro de publication : **0 063 510**
**B1**

(12) **FASCICULE DE BREVET EUROPÉEN**

(45) Date de publication du fascicule du brevet :
20.08.86

(51) Int. Cl.⁴ : **B 60 N 1/06**

(21) Numéro de dépôt : **82400570.6**

(22) Date de dépôt : **30.03.82**

(54) Ossatures des sièges de véhicules, à dossier réglable en inclinaison.

(30) Priorité : 16.04.81 FR 8107712

(43) Date de publication de la demande :
27.10.82 Bulletin 82/43

(45) Mention de la délivrance du brevet :
20.08.86 Bulletin 86/34

(84) Etats contractants désignés :
**BE DE GB IT NL SE**

(56) Documents cités :
FR-A- 1 569 654
FR-A- 1 587 737
FR-A- 1 590 551
FR-A- 2 462 127
US-A- 3 562 851
US-A- 3 673 891

(73) Titulaire : **SOCIETE INDUSTRIELLE BERTRAND FAURE**
**Brières les Scellés**
**F-91150 Etampes (FR)**

(72) Inventeur : **Letournoux, Alain**
**23, rue de Rosette**
**F-45100 Saint Jean de Blanc (FR)**

(74) Mandataire : **Behaghel, Pierre et al**
**CABINET PLASSERAUD 84 rue d'Amsterdam**
**F-75009 Paris (FR)**

Jouve, 18, rue St-Denis, 75001 Paris, France

## Description

L'invention est relative aux ossatures des sièges, notamment de véhicules, qui sont articulés, c'est-à-dire dont le dossier est réglable en inclinaison en étant monté sur l'assise par l'intermédiaire d'une articulation.

Elle concerne plus particulièrement, parmi ces sièges, ceux dont l'articulation comporte au moins une galette plate présentant une denture circulaire ou portion de telle denture exploitée aux fins de réglage et/ou de verrouillage de l'articulation elle-même, galette solidarisée avec l'ossature d'assise ou de dossier, et de préférence ceux dont l'articulation comporte deux telles galettes solidarisées respectivement avec les deux ossatures d'assise et de dossier.

Dans des modes de réalisation préférés, la denture ou portion de denture considérée est réalisée par semi-estampage, c'est-à-dire par une opération qui fait apparaître sur l'une des faces de la galette une première denture et sur son autre face la réplique négative de ladite denture, c'est-à-dire une seconde denture orientée intérieurement si la première denture est orientée extérieurement et vice versa.

Dans des sièges équipés de telles articulations, chaque ossature d'assise ou de dossier solidaire d'une galette comprend un prolongement radial de cette galette formant un seul bloc avec celle-ci et s'étendant généralement à une distance de l'axe de la galette supérieure à trois fois le rayon de la denture considérée : en effet, on ne dispose pas de place suffisante sur la galette elle-même pour pouvoir assembler assez solidement sur celle-ci le restant de l'ossature considérée, et ce restant est donc assemblé directement sur ledit prolongement, notamment par soudage.

Dans de tels sièges, décrits par exemple par le brevet FR-A-1 569 654, le prolongement en question est formé dans la même plaque que la galette elle-même, c'est-à-dire en un matériau relativement coûteux et sur une épaisseur relativement grande, épaisseur qui est surabondante pour les besoins mêmes de la résistance de la portion d'ossature correspondante : les portions d'ossature en question sont donc relativement pesantes et coûteuses.

Dans d'autres sièges équipés d'articulations du genre ci-dessus, tels que ceux décrits dans le brevet FR-A-1 590 551, les galettes circulaires dentées, exemptes de prolongements radiaux, sont contenues dans des boîtiers comportant de tels prolongements et sont soudées contre ces boîtiers.

Cette construction est très exigeante en ce qui concerne la solidité des soudures, vu que celles-ci doivent résister par elles-mêmes aux couples exercés sur le dossier. De plus, elle exige un grand nombre de pièces constitutives et conduit à une construction relativement pesante et encombrante axialement.

L'invention a pour but, surtout, de remédier à ces inconvénients en proposant une construction à la fois légère, solide, économique et peu encombrante axialement.

Par rapport à l'ossature de siège selon FR-A-1 590 551, qui décrit déjà au moins une galette plate circulaire portant une denture circulaire ou portion de telle denture exploitable aux fins de réglage et/ou de verrouillage de l'articulation et un flasque en tôle plus mince que la galette rapporté sur celle-ci, notamment par soudure, l'invention est essentiellement caractérisée en ce que la galette porte une denture circulaire extérieure ou portion de telle denture non utilisée intégralement pour le réglage et/ou le verrouillage de l'articulation et en ce que le flasque est ajouré par une ouverture dont le bord est denté selon un profil complémentaire de celui de ladite denture ou portion de denture extérieure et entoure jointivement cette denture ou portion de denture de façon que soit assuré l'ancrage angulaire du flasque sur la galette.

Dans des modes de réalisation préférés, on a recours en outre à l'une et/ou à l'autre des dispositions suivantes :

dans une ossature du genre considéré comprenant deux galettes dentées par semi-estampage, solidaires respectivement de l'ossature d'assise et de l'ossature de dossier et pour laquelle la denture extérieure de la première galette est propre à rouler à la façon d'un engrenage dans la denture intérieure de la seconde galette, les dentures extérieures utilisées pour l'ancrage des flasques d'assise et de dossier sur leurs galettes respectives comprennent une portion axiale de la denture extérieure utile de la première galette et la denture extérieure inutilisée de la seconde galette,

dans une ossature du genre considéré comprenant deux galettes dentées par semi-estampage et solidaires respectivement de l'ossature d'assise et de l'ossature de dossier et pour lesquelles les deux dentures intérieures coagissent avec un même élément denté extérieurement, les dentures extérieures exploitées respectivement pour l'ancrage des deux flasques d'assise et de dossier sur les galettes correspondantes sont les dentures extérieures inutilisées de ces deux galettes,

dans une ossature du genre considéré pour laquelle la denture ou portion de denture exploitée aux fins d'ancrage d'un flasque est obtenue par semi-estampage, la denture intérieure correspondant à cette denture extérieure est distincte de celle exploitée aux fins de réglage et/ou de verrouillage de l'articulation,

dans une ossature selon l'alinéa précédent, l'une au moins des galettes comprend une nervure circulaire faisant saillie axialement sur cette galette, nervure dont le flanc denté externe sert à l'ancrage du flasque correspondant et dont le flanc cranté interne sert au réglage et/ou au verrouillage de l'articulation,

des nervures ou rainures de raidissement sont prévues dans les flasques en tôle relativement mince.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant au dessin ci-annexé d'une manière bien entendu non limitative.

Les figures 1 à 3, de ce dessin, montrent respectivement trois ensembles d'articulation et d'éléments d'ossatures de sièges établis selon l'invention, ces ensembles étant représentés selon des coupes axiales, c'est-à-dire considérés dans des plans passant par les axes des articulations.

La figure 4 est une vue partielle de l'ensemble de la figure 1 selon la flèche IV.

Dans chacun des modes de réalisation illustrés, l'articulation du dossier de siège comprend deux galettes plates circulaires 1, 2, exemptes de prolongements radiaux, dont l'une est rendue solidaire de l'ossature de l'assise et l'autre, de l'ossature du dossier, d'une manière qui sera décrite plus loin.

Sur l'une des faces de chaque galette a été formée une denture circulaire (3, 4) destinée à être exploitée aux fins de réglage et/ou de verrouillage de l'inclinaison du dossier.

Cette denture a été obtenue par semi-estampage, de sorte qu'il lui correspond sur la face opposée de la galette concernée une réplique négative (5, 6), c'est-à-dire une seconde denture orientée extérieurement ou intérieurement selon que la première denture (3, 4) est au contraire orientée intérieurement ou extérieurement.

On exploite au moins une portion axiale et/ou angulaire de la denture extérieure de chaque couple de telles dentures intérieure et extérieure aux fins d'ancrage angulaire d'un flasque constitutif de l'ossature correspondante d'assise ou de dossier, ce flasque (7 pour l'assise, 8 pour le dossier) étant à cet effet percé d'une ouverture (9, 10) dont le bord est denté circulairement de façon à coopérer avec la portion de denture considérée en entourant jointivement cette dernière.

Le flasque 7, 8 en question peut alors être constitué indépendamment de la galette 1, 2 sur laquelle il est fixé.

En particulier, il peut être formé en un matériau différent et surtout avec une épaisseur très inférieure : l'épaisseur choisie pour les plaques métalliques constitutives des galettes est en effet surabondante pour ce qui est de la résistance mécanique des flasques d'ossature.

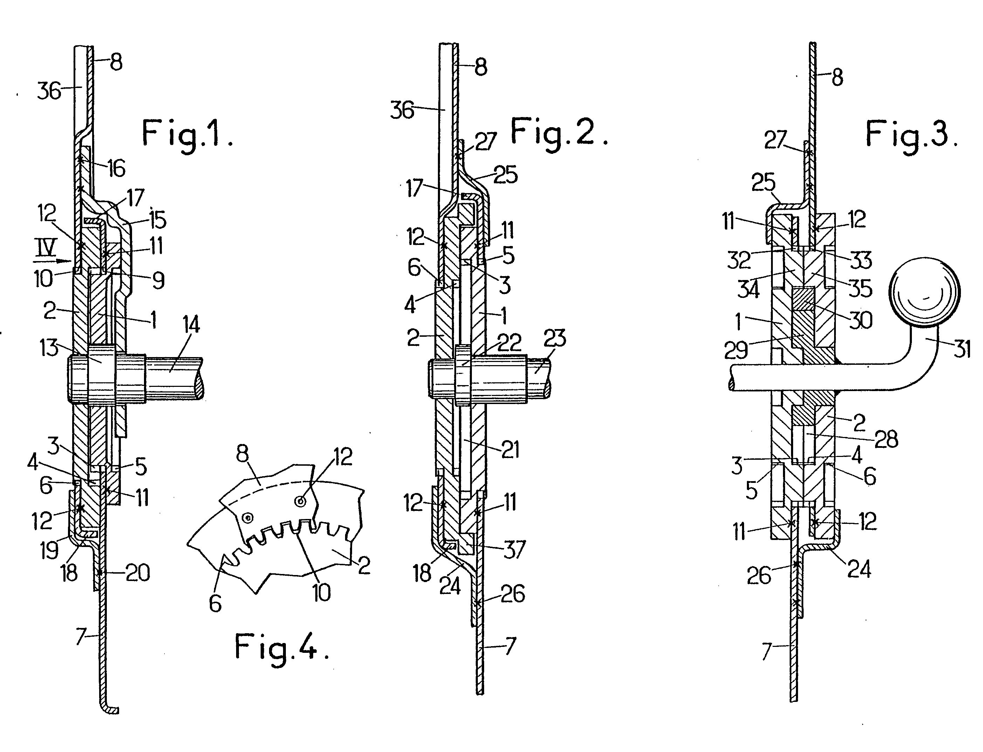

Pour assurer une bonne rigidité de chaque flasque 7, 8 malgré la minceur relative de la tôle qui le constitue, on prévoit avantageusement sur ce flasque des nervures ou rainures de raidissement appropriées telles que celles visibles en 36 sur les figures 1 et 2.

L'ancrage angulaire assuré de la manière décrite ci-dessus entre chaque flasque 7, 8 et la galette 1, 2 correspondante, réparti tout au long des dentures circulaires en prise mutuelle, est particulièrement solide.

Pour compléter la solidarisation entre chaque flasque et la galette correspondante, il suffit d'assembler axialement entre elles deux plages annulaires transversales, appliquées l'une contre l'autre, de ces deux pièces : cet assemblage axial est notamment assuré par vissage, collage, rivetage ou à l'aide de points de soudure (11, 12) qui peuvent être relativement peu nombreux vu que l'ensemble ne travaille absolument pas selon la direction axiale.

On obtient ainsi, d'une manière particulièrement simple, un assemblage très robuste entre chaque flasque et la galette correspondante, tout en formant un ensemble particulièrement léger et peu coûteux.

Dans l'articulation des figures 1 et 4, les deux dentures exploitées par le mécanisme proprement dit sont, d'une façon connue en soi, la denture extérieure 3 de la galette 1 et la denture intérieure 4 de la galette 2.

La première denture 3 comporte un nombre de dents plus petit que la seconde 4 et est montée de façon à pouvoir rouler dans la seconde sous la commande des rotations d'un excentrique 13 logé à frottement doux dans un alésage central de la galette 1, cet excentrique étant lui-même solidaire d'un arbre central 14 entraînable en rotation par une manette (non représentée) accessible par la personne assise sur le siège.

L'arbre central 14 est porté par deux paliers à glissement coaxiaux, prévus respectivement au centre de la galette 2 et dans une chape 15 rapportée par soudage en 16 sur le flasque 8 du dossier.

Ledit flasque 8 est ancré de la façon décrite plus haut par son emmanchement axial sur la denture extérieure 6 de la galette 2 et le flasque 7 d'assise est ancré, de la même façon, sur la portion axiale, de la denture extérieure 3 de la galette 1, qui est disposée axialement au fond de cette denture, c'est-à-dire le plus loin de l'extrémité axiale libre de ladite denture.

On prévoit à l'extrémité supérieure arrière du flasque d'assise 7 un bord rabattu 17 enveloppant le bord correspondant de la galette 2 et, à l'extrémité inférieure du flasque de dossier 8, un bord rabattu 18 enveloppant le bord correspondant de cette même galette 2.

On prévoit en outre un morceau de tôle 19 plié selon un Z étiré, dont une patte est soudée en 20 sur le flasque 7 et dont l'autre patte chevauche la base du flasque 8, elle-même soudée contre la base de la galette 2, de façon à assurer le maintien en place axial mutuel des différents composants de l'ensemble.

Dans l'articulation de la figure 2, les deux dentures exploitées pour le mécanisme sont, d'une façon connue en soi, les dentures intérieures 3 et 4 des deux galettes 1 et 2.

Ces dentures intérieures — dont les diamètres peuvent être différents, comme illustré, ou identiques — sont appliquées axialement contre l'autre de façon à former entre les galettes une chambre 21 propre à recevoir une roue dentée extérieurement (non représentée) agencée de façon à rouler à la fois dans ces deux dentures.

Cette roue est traversée à frottement doux en son centre par une pastille circulaire 22 solidaire d'un arbre 23 tout en étant excentrée par rapport à cet arbre.

Ce dernier, solidaire d'une manette de commande (non représentée), est porté par deux paliers à glissement prévus respectivement au centre des deux galettes 1 et 2.

Le flasque 7 d'assise est ici ancré de la façon indiquée ci-dessus sur la denture extérieure 5 de la galette 1 et le flasque 8 de dossier est ancré de la même façon sur la denture extérieure 6 de la galette 2.

Une collerette 37, réalisée par semi-estampage à la périphérie de la galette 2, est prévue pour entourer jointement la galette 1 de façon à fermer périphériquement la chambre 21.

On prévoit encore ici des morceaux de tôle 24, 25 pliés selon les Z étirés et soudés respectivement en 26 sur le flasque 7 et en 27 sur le flasque 8 et propres à chevaucher jointement les portions en regard de l'articulation de façon à assurer sa cohésion axiale.

Enfin, comme précédemment, un bord rabattu 17 prévu à l'extrémité supérieure arrière du flasque d'assise 7 enveloppe la collerette 37, alors qu'un bord rabattu 18 de l'extrémité inférieure du flasque du dossier 8 enveloppe la zone périphérique correspondante de la galette 2.

Dans l'articulation de la figure 3, les deux galettes 1 et 2 sont encore pourvues de dentures circulaires internes 3 et 4 appliquées axialement l'une contre l'autre de façon à réserver entre elles une chambre 28.

Mais ici les dentures en question ne sont pas constituées par des dents d'engrenage, mais par des crans plus petits, de profil par exemple triangulaire et la chambre 28 est composée d'un logement central propre à recevoir une came rotative 29 et de guides radiaux, par exemple au nombre de trois, propres à recevoir des grains 30 crantés extérieurement : ces grains sont sollicités radialement à l'aide de la came 29, sous la commande d'une manette 31 solidaire de cette came, de façon telle que leurs crans coopèrent avec ceux des dentures 3 et 4 pour la position angulaire de repos de ladite manette, vers laquelle celle-ci est constamment sollicitée par un ressort (non représenté).

Un tel mécanisme a par exemple été décrit dans le brevet FR-A-2 462 127.

Avec ce mécanisme on ne peut pas utiliser aux fins d'ancrage angulaire des flasques les crantages extérieurs 5 et 6 réalisés par semi-estampage en même temps que les dentures ou crantages internes 3 et 4, car les dimensions des crans sont insuffisantes.

On fait alors venir indépendamment dans chaque galette, par la même opération de semi-estampage, des dentures externes 32, 33 suffisamment marquées pour assurer les ancrages désirés.

A cet effet notamment on pratique par semi-estampage sur chaque galette une nervure circulaire (34, 35) dont le flanc cranté interne constitue la denture interne 3 ou 4 destinée à coopérer avec les grains 30 et dont le flanc denté externe constitue la denture extérieure d'ancrage 32 ou 33.

On retrouve ici, comme dans le mode de réalisation de la figure 2, des pièces en tôle 24, 25 pliées selon un Z étiré et soudées respectivement en 26 sur le flasque d'assise 7 et en 27 sur le flasque de dossier 8 en formant chapes pour assurer la cohésion axiale de l'ensemble.

En suite de quoi, et quel que soit le mode de réalisation adopté, on dispose d'ensembles d'articulation et d'éléments d'ossature de siège dont la constitution résulte suffisamment de ce qui précède.

Ces ensembles présentent un certain nombre d'avantages par rapport à ceux antérieurement connus, en particulier en ce qui concerne le faible poids, le bas prix et l'universalité accrue des applications possibles : en effet en limitant les flasques habituels compris par les articulations du genre considéré aux seules galettes circulaires dentées, on rend celles-ci adaptables sur un plus grand nombre de sièges que précédemment, la seule condition à respecter étant que ces sièges comportent des flasques ajourés en correspondance avec les dentures extérieures d'ancrage desdites galettes de façon à pouvoir bénéficier de l'avantage qui a été décrit ci-dessus relatif à l'ancrage angulaire.

L'invention embrasse, bien entendu, les variantes dans lesquelles les portions, des dentures extérieures des galettes, exploitées aux fins d'ancrage angulaire des flasques, seraient considérées non pas axialement, comme dans le cas de la portion axiale de la denture 3 de la figure 1 ci-dessus, mais angulairement, ces portions étant par exemple identiques, au nombre de trois, et décalées angulairement entre elles de 120 degrés, avec chacune une amplitude angulaire comprise entre 30 et 60 degrés.

## Revendications

1. Ossature de siège, notamment pour véhicule, dont le dossier est monté sur l'assise par l'intermédiaire d'une articulation de façon à être réglable en inclinaison, comportant au moins une galette plate circulaire (1, 2) qui présente une denture circulaire (3, 4) ou portion de telle denture exploitable aux fins de réglage et/ou de verrouillage de l'articulation, et au moins un flasque (7, 8) en tôle plus mince que la galette, rapporté sur celle-ci, notamment par soudure, caractérisée en ce que la galette (1, 2) porte une denture circulaire extérieure (3 ou 5, 6 ; 32, 33) ou portion de telle denture non utilisée intégralement par le réglage et/ou le verrouillage de l'articulation, et en ce que le flasque (7, 8) est ajouré par une ouverture dont le bord (9, 10) est denté selon un profil complémentaire de celui de ladite denture ou portion de denture extérieure et entoure jointivement cette denture ou portion de denture de façon que soit assuré l'ancrage angulaire du flasque sur la galette.

2. Ossature selon la revendication 1 comprenant deux galettes (1, 2) dentées par semi-estampage, solidaires respectivement de l'ossature d'assise et de l'ossature de dossier et pour laquelle la denture extérieure (3) de la première galette (1) est propre à rouler à la façon d'un engrenage dans la denture intérieure (4) de la seconde galette (2), caractérisée en ce que les dentures extérieures utilisées pour l'ancrage des flasques d'assise (7) et de dossier (8) sur les galettes respectives (1, 2) comprennent une portion axiale de la denture extérieure utile (3) de la première galette (1) et la denture extérieure (6) inutilisée pour le réglage de l'articulation, de la seconde galette (2).

3. Ossature selon la revendication 1 comprenant deux galettes (1, 2) dentées par semi-estampage et solidaires respectivement de l'ossature d'assise et de l'ossature de dossier et pour lesquelles les deux dentures intérieures (3, 4) coagissent avec un même élément intérieur denté extérieurement, caractérisée en ce que les dentures extérieures (5, 6) exploitées respectivement pour l'ancrage des deux flasques d'assise (7) et de dossier (8) sur les galettes (1, 2) correspondantes sont les dentures extérieures (5, 6) inutilisées pour le réglage de l'articulation de ces deux galettes.

4. Ossature selon la revendication 1, caractérisée en ce que la denture extérieure (32, 33) ou portion de denture de la galette (1, 2) exploitée aux fins d'ancrage d'un flasque (7, 8) est obtenue par semi-estampage, et en ce que la denture intérieure (5, 6) correspondant à l'estampage de cette denture extérieure est distincte de la denture intérieure (3, 4) exploitée aux fins de réglage et/ou de verrouillage de l'articulation.

5. Ossature selon la revendication 4, caractérisée en ce que l'une au moins des galettes (1, 2) comprend une nervure circulaire (34, 35) faisant saillie axialement sur cette galette, nervure dont le flanc denté externe (32, 33) sert à l'ancrage du flasque correspondant (7, 8) et dont le flanc cranté interne (3, 4) sert au réglage et/ou au verrouillage de l'articulation.

6. Ossature selon l'une quelconque des précédentes revendications, caractérisée en ce que les nervures ou rainures de raidissement (36) sont prévues dans les flasques (7, 8) en tôle relativement mince, vis-à-vis de l'épaisseur des galettes.

7. Ossature selon l'une quelconque des revendications 1, 4, 5 et 6, caractérisée en ce que la portion de denture extérieure de galette (1, 2) servant à l'ancrage angulaire d'un flasque (7, 8) est une portion angulaire, de cette denture, composée de plusieurs secteurs dentés angulairement décalés entre eux.

**Claims**

1. Seat frame, more particularly for vehicle, whose back is mounted on the sitting portion by means of a hinge so as to be inclinably adjustable, comprising at least one flat circular disk (1, 2) which has a circular set to teeth (3, 4) or a portion of such teeth usable for the purpose of adjusting and/or locking the hinge, and at least a flange (7, 8) made from thinner metal sheet than the disk, secured thereto, more especially by welding, characterized in that the disk (1, 2) carries an external circular set of teeth (3 or 5, 6 : 32, 33) or a portion of such a set of teeth not wholly used for adjusting and/or locking the hinge and in that the flange (7, 8) is pierced with an opening whose edge (9, 10) is toothed according to a profile complementary to that of said external set of teeth or toothed portion and jointingly surrounds this set of teeth or toothed portion so as to provide angular anchorage of the flange to the disk.

2. Seat frame according to claim 1, comprising two disks (1, 2) toothed by semi-stamping, integral respectively with the sitting portion frame and the seat-back frame and in which the external set of teeth (3) of the first disk (1) is adapted to roll like a gear in the internal set of teeth (4) of the second disk (2), characterized in that the external sets of teeth used for anchoring the sitting portion (7) and seat-back (8) flanges to the respective disks (1, 2) comprise an axial portion of the useful external set of teeth (3) of the first disk (1) and the external set of teeth (6), of the second disk (2), unused for adjusting the hinge.

3. Seat frame according to claim 1, comprising two disks (1, 2) toothed by semi-stamping and integral respectively with the sitting portion frame and with the seat-back frame and in which the two inner sets of teeth (3, 4) coact with a same internal externally toothed element, characterized in that the external sets of teeth (5, 6) used respectively for anchoring the two sitting portion (7) and seat-back (8) flanges to the corresponding disks (1, 2) are the sets of teeth (5, 6), of these two disks, unused for adjusting the hinge.

4. Seat frame according to claim 1, characterized in that the set of teeth (32, 33) or toothed portion of the disk (1, 2) used for anchoring a flange (7, 8) is obtained by semi-stamping, and in that the inner set of teeth (5, 6) corresponding to the stamping of this external set of teeth is separate from the internal set of teeth (3, 4) used for adjusting and/or locking the hinge.

5. Seat frame according to claim 4, characterized in that one at least of the disks (1, 2) comprises a circular rib (34, 35) projecting axially from this disk, the external toothed side (32, 33) of this rib serving for anchoring the corresponding flange (7, 8) and the internal notched side (3, 4) thereof serving for adjusting and/or locking the hinge.

6. Seat frame according to any one of the preceding claims, characterized in that stiffening ribs or grooves (36) are provided in the flanges (7, 8) made from relatively thin metal sheet, in relation to the thickness of the disks.

7. Seat frame according to any one of claims 1, 4, 5 and 6, characterized in that the portion of the external set of teeth of disk (1, 2) serving for angularly anchoring a flange (7, 8) is an angular portion, of this set of teeth, formed from several toothed sectors offset angularly with respect to each other.

## Patentansprüche

1. Sitzgestell, insbesondere für einen Fahrzeugsitz, dessen Rückenlehne an dem Sitzteil durch Einfügen einer Gelenkverbindung befestigt ist, die eine Verstellung der Neigung zuläßt und das wenigstens eine flache kreisförmige Scheibe (1, 2) mit einer kreisförmigen Verzahnung (3, 4) oder einem mit einer derartigen Verzahnung versehenen Abschnitt, die bzw. der zum Zweck der Verstellung und/oder der Verriegelung der Gelenkverbindung dient und wenigstens einen Flansch (7, 8) aus einem Blech, das dünner ist als die Scheibe, enthält und an dieser, vorzugsweise durch Schweißenn angebracht ist, dadurch gekennzeichnet, daß die Scheibe (1, 2) eine äußere kreisförmige Verzahnung (3 oder 5, 6 ; 32, 33) oder einen mit einer derartigen Verzahnung versehenen Abschnitt enthält, die bzw. der nich gleichzeitig zur Verstellung und/oder zur Verriegelung der Gelenkverbindung dient und daß in dem Flansch (7, 8) eine Öffnung ausgespart ist, deren Rand (9, 10) mit einer Verzahnung versehen ist, deren Profil dem der erwähnten Verzahnung oder dem des mit der äußeren Verzahnung versehenen Abschnittes entspricht und die diese Verzahnung oder den mit der Verzahnung versehenen Abschnitt dicht umgibt, so daß der winklige Eingriff des Flansches an der Scheibe sichergestellt wird.

2. Sitzteil nach Anspruch 1, das zwei Scheiben (1, 2) enthält, die durch Halbprägen mit der Verzahnung versehen sind und fest an dem Gestell des Sitzteiles bzw. dem Gestell der Rückenlehne angebracht sind, und bei dem die äußere Verzahnung (3) der ersten Scheibe (1) nach Art eines Getriebes an der inneren Verzahnung (4) der zweiten Scheibe (2) abrollen kann, dadurch gekennzeichnet, daß die äußeren Verzahnungen, die für die Verankerung der Flansche (7 bzw. 8) des Sitzteiles und der Rückenlehne an den entsprechenden Scheiben (1, 2) benutzt werden, aus einem axialen Abschnitt der wirksamen äußeren Versahnung (3) der ersten Scheibe (1) und der äußeren nicht zur Verstellung der Gelenkverbindung benutzten Verzahnung (6) der zweiten Scheibe (2) bestehen.

3. Sitzgestell nach Anspruch 1 mit zwei Scheiben (1, 2), die durch Halbprägen mit Verzahnungen versehen und fest an dem Gestell des Sitzes bzw. der Rückenlehne angebracht sind und bei denen die beiden inneren Verzahnungen (3, 4) mit demselben inneren, mit einer äußeren Verzahnung versehenen Element zusammenwirken, dadurch gekennzeichnet, daß die äußeren Verzahnungen (5, 6), die zum Verankern oder Verriegeln der beiden Flansche des Sitzteiles (7) bzw. der Rückenlehne (8) an den entsprechenden Scheiben (1, 2) vorgesehen sind, die äußeren Verzahnungen (5, 6), die zum Verankern oder Verriegeln der beiden Flansche des Sitzteiles (7) bzw. der Rückenlehne (8) an den entsprechenden Scheiben (1, 2) vorgesehen sind, die äußeren Verzahnungen (5, 6) sind, die nicht zur Verstellung der Gelenkverbindung der beiden Scheiben benutzt werden.

4. Sitzgestell nach Anspruch 1, dadurch gekennzeichnet, daß die äußere Verzhnung (32, 33) oder mit der Verzahnung versehene Abschnitt der Scheiben (1, 2), der zum Verriegeln eines Flansches (7, 8) benutzt wird, durch Halbprägen hergestellt wird und daß die innere Verzahnung, die der Prägung dieser äußeren Verzahnung entspricht, von der inneren Verzahnung (3, 4), die zur Verstellung und/oder Verriegelung der Gelenkverbindung benutzt wird, verschieden ist.

5. Sitzgestell nach Anspruch 4, dadurch gekennzeichnet, daß wenigstens eine der Scheiben (1, 2) eine kreisförmige Rippe (34, 35) enthält, die axial gegenüber der Scheibe vorspringt und deren mit einer Verzahnung versehener äußerer Flansch (32, 33) zum Feststellen des entsprechenden Flansches (7, 8) dient und deren innerer mit einer Verzahnung (3, 4) versehener Flansch zur Verstellung und/oder Verriegelung der Gelenkverbindung dient.

6. Sitzgestell nach einem der vorhergehenden Ansprüche, dadurch gekennzeichnet, daß die Flansche (7, 8) mit Vorsprüngen oder Falzen (36) aus einem verglichen mit der Stärke der Scheiben verhältnismäßig dünnen Blech versehen sind.

7. Sitzgestell nach einem der Ansprüche 1, 4, 5 und 6, dadurch gekennzeichnet, daß der mit der äußeren Verzahnung versehene Abschnitt der Scheiben (1, 2), der zum winkligen Verriegeln eines Flansches (7, 8) dient, ein winkliger Abschnitt dieser Verzahnung ist, der aus mehreren mit einer Verzahnung versehenen Sektoren besteht, die winklig zueinander versetzt angeordnet sind.

Fig.1.

Fig.2.

Fig.3.

Fig.4.